# EUROPEAN PATENT APPLICATION

(11) **EP 3 582 045 A1**
(43) Date of publication of application: **18.12.2019**
(21) Application number: 18193174.2
(22) Date of filing: 07.09.2018
(51) Int. Cl.: G05B 19/4093, G05B 19/4097, G05B 19/4099

(54) **GENERATING TOOL PATH AFTER SELECTING MACHINING STRATEGIES**

(30) Priority: 14.06.2018 EP 18177834
(71) Applicant: Sandvik Machining Solutions AB, 811 81 Sandviken (SE)
(72) Inventor: NORDELL, Hugo, 129 36 Hägersten (SE); BRANDT, Daniel, 393 65 Kalmar (SE); WEDLUND, Daniel, 811 36 Sandviken (SE)
(74) Representative: Sandvik

(57) **Abstract**

A method (400) and a corresponding system (180) and computer program are provided. A model (150) of an object to be manufactured via subtractive manufacturing is obtained (401). A plurality of geometric features to be machined as part of manufacturing the object is identified (402) based on the model. Strategies for machining the respective geometric features via subtractive manufacturing are selected (403). After selecting strategies for all of the plurality of geometric features, one or more tool paths for manufacturing the object in accordance with the selected strategies are generated (404). In traditional CAM programming or CNC programming, sequential dependence makes it difficult to go back and undo a decision made earlier during the programming, without having to undo several other decisions as well. This sequential dependence may be avoided by postponing generation of tool paths until after selecting strategies for all of the geometric features to be machined.

## Description

### Technical field

The present disclosure generally relates to machining, and in particular to process planning for machining operations for subtractive manufacturing.

### Background

Computer-aided design (CAD) models are often employed to define objects to be manufactured. Tolerances and other requirements for the objects to be manufactured may also be obtained via product and manufacturing information (PMI). The manufacturing may be performed via machining operations performed by one or more machine tools. A cutting tool mounted in the machine tool is moved by the machine tool relative to a work piece, so that the cutting tool cuts away material from the work piece to form the object to be manufactured.

Computer-aided manufacturing (CAM) is typically employed to decide how to manufacture the object defined by the CAD model. This is a complicated task involving many factors/parameters such as selecting machine tools, operation sequences (for example involving roughing, semi-finishing and finishing), operation strategies, fixtures for holding the work piece, cutting tools, tool paths, and cutting data (such as feed rate, cutting speed, and depth of cut). These factors affect the quality and precision of the manufactured object, and may also affect the manufacturing time and/or wear on the cutting tools. Hence, CAM programmers often need plenty of time and experience for making suitable tradeoffs so as to reach a suitable solution to this complicated task. Modern CAM software may include some elements of automation for assisting CAM programmers, but CAM programmers still need to rely on experience as well as trial and error to actually reach a suitable solution.

Once the CAM programming has been completed, it may be difficult to go back and modify choices or tradeoffs made by the CAM programmer. Indeed, many of the choices made by the CAM programmer are interrelated and affect several aspects of the machining. Hence, even if only a minor modification is desired, the CAM programmer may have to redo a large part of the CAM programming to handle this modification. Therefore, the outcome of the work performed by the CAM programmer for manufacturing of a first object may be difficult to reuse for manufacturing similar objects, despite the fact that the objects may have many features in common with the first object.

Computer numerically controlled (CNC) machine tools are typically employed for the manufacturing. Post-processing is employed to convert the result of the CAM programming into machine code executable by the control system of the CNC machine tool in which the object is to be manufactured. Machine operators (or CNC operators) often adapt or modify the machine code based on their own knowledge and experience of the machine tool. Preference as regards machining method and for achieving desired results may for example lead the machine operator to modify the machine code. It may also be necessary to modify the machine code to make corrections for mistakes made in the CAM programming. CNC operators may need plenty of time and/or experience for making appropriate modifications of the machine code. Moreover, test runs are often employed to check that the machine code actually causes the machine to perform as expected. Computer simulations may also be performed to detect potential problems. Test runs and simulations may for example incur extra costs and/or cause delays.

It would be desirable to provide new ways to address one or more of the abovementioned issues.

### Summary

Methods, systems and computer programs having the features defined in the independent claims are provided for addressing one or more of the abovementioned issues. Preferable embodiments are defined in the dependent claims.

Hence, a first aspect provides embodiments of a method. The method comprises obtaining a model of an object to be manufactured via subtractive manufacturing (such as metal cutting), and identifying, based on the model, a plurality of geometric features to be machined as part of manufacturing the object. The method comprises selecting strategies for machining the respective geometric features via subtractive manufacturing, and after selecting strategies for all of the plurality of geometric features, generating one or more tool paths for manufacturing the object in accordance with the selected strategies.

Traditionally, when a CAM programmer selects strategies for machining the geometric features of an object, the tool paths are integral parts of the selected strategies. In other words, the CAM programmer figures out a strategy, including suitable tool paths, for machining the first geometric feature. Then the CAM programmer moves on to the next geometric feature to be machined, and figures out a suitable strategy, including tool paths, for machining the second feature after the first feature. This creates a sequential dependence (or time dependence), where the strategy for machining a geometric feature depends on the strategies selected for machining the earlier geometric features. Going back and changing or modifying the strategy associated with an earlier geometric feature may therefore be difficult, since the strategies for machining other features (located later in the sequence) may then also have to be changed. In other words, it may be difficult to go back and undo a decision made during the CAM programming, without having to undo several other decisions as well. The same problem applies also for CNC programming, where a CNC programmer selects how to machine an object by entering CNC instructions directly into a machine tool without using CAM software. Sequential dependence prevents also the CNC programmer from going back and undoing a decision made earlier during the CNC programming, without having to undo several other decisions as well.

The inventors have realized that this sequential dependence may be avoided by postponing generation of tool paths until after selecting strategies for all of the plurality of geometric features. In other words, the generation of tool paths is dispensed with until strategies have been selected for all of the identified geometric features. Hence, the selected strategies do not need to include the actual tool paths for machining the geometric features (but may for example include indications of how tool paths may be generated). Such tool paths are instead generated at the end when strategies have been selected for all of the identified geometric features. This facilitates going back to change or adapt a strategy which has been selected earlier for a geometric feature, without also having to modify strategies selected for other geometric features. It may also allow the user to change the order of machining operations without affecting the overall performance of the final tool path generation.

Moreover, waiting to generate tool paths until strategies have been selected for all identified geometric features may allow the tool path generation to provide more optimized tool paths (for example with respect to manufacturing throughput, tool life, or surface quality). Indeed, the tool path generation may take into account not only strategies for machining the current feature and earlier features, but also selected strategies for machining subsequent features. Consider for example an object having a first hole with a large diameter, and a second hole with a smaller diameter located at the bottom of the first hole. If a milling tool with sufficiently small diameter is employed to machine the larger hole, then the same milling tool could be employed for machining also the smaller hole. If tool paths were to be generated one feature at a time, then the generated tool path may end up causing the milling tool to retract when the first hole has been finished, before machining of the second hole is initiated. If, on the other hand, strategies for machining all geometric features have been selected before the tool paths are generated, then the tool path generator may realize that there is no need for the milling tool to retract from the first hole. The milling tool may instead stay within the first hole and directly begin machining of the second hole located at the bottom of the first hole.

The object to be manufactured may for example have more geometric features than the identified plurality of geometric features.

The identified plurality of geometric features may for example comprise all geometric features of the object to be manufactured.

It will be appreciated that a strategy may be selected via a single selection (such as to select between all available strategies 1, 2, 3 ,4 ...), or in a sequence of steps (such as to first select a cutting tool, and then select between those of the available strategies which involve use of the selected cutting tool).

The model may for example be a three-dimensional model such as a CAD model.

The method may for example be a computer-implemented method.

The strategies may for example be selected by a digital processor, with or without input from a human user.

According to some embodiments, the method may further comprise providing a new set of selected strategies by at least replacing or altering or deleting a previously selected strategy for manufacturing a geometric feature. The proving of the new set of selected strategies may be performed prior to generating the one or more tool paths for manufacturing the object in accordance with the selected strategies. The one or more tool paths may be generated based on the new set of selected strategies. The replacing, altering or deleting of a previously selected strategy may for example be performed independently of strategies selected for other geometric features.

According to some embodiments, the method may further comprise, after generating the one or more tool paths for manufacturing the object in accordance with the selected strategies, providing a new set of selected strategies by at least replacing or altering or deleting a previously selected strategy for manufacturing a geometric feature, and generating one or more new tool paths for manufacturing the object in accordance with the new set of selected strategies. In other words, even if the tool paths have already been generated, a previously selected strategy may still be replaced, altered or deleted, but new tool paths may then need to be generated. Hence, even if a user would like to replace, alter or delete a strategy selected for one geometric feature, the time and effort spent on selecting strategies for other geometric features is not wasted, since strategies selected for the other geometric features may still be employed when generating the new tool paths.

According to some embodiments, the method may further comprise changing an order in which to machine the identified geometric features. This changing may be performed prior to generating the one or more tool paths for manufacturing the object in accordance with the selected strategies. The one or more tool paths may be generated in accordance with the changed order. It will be appreciated that since the order in which to machine the identified geometric features is changed, the order in which to employ the corresponding selected strategies is changed accordingly.

According to some embodiments, the method may further comprise, after generating the one or more tool paths for manufacturing the object in accordance with the selected strategies, changing an order in which to machine the identified geometric features, and generating one or more new tool paths for manufacturing the object in accordance with the changed order. In other words, even if the tool paths have already been generated, the order in which to machine the identified geometric features may still be changed, but new tool paths may then need to be generated. Hence, even if a user would like to change the order in which to machine the identified geometric features, the time and effort spent on selecting strategies for the identified geometric features is not wasted, since the strategies selected for the geometric features may still be employed when generating the new tool paths. In other words, there may be no need to select new strategies. It will be appreciated that since the order in which to machine the identified geometric features is changed, the order in which to employ the corresponding selected strategies is changed accordingly.

According to some embodiments, the method may further comprise illustrating, to multiple users, the model of the object to be manufactured, and receiving user input from the multiple users (for example human users). The one or more tool paths may be generated based on the user input from the multiple users.

The user input from a user may for example indicate a location in the model of a feature to be identified, or selection of a strategy for machining an identified geometric feature, or an order in which to machine identified geometric features, or how to generate the one or more tool paths based on the selected strategies.

The postponement of the generation of tool paths until after selection of strategies for all of the identified geometric features allows multiple users to participate in the process planning. Since the sequential dependence associated with traditional CAM programming and CNC programming is avoided, the work performed by one user for one geometric feature may be unaffected by the work done by another user for another geometric feature. One of the users may for example cooperate with the system for identifying a geometric feature and selecting a suitable strategy for machining that geometric feature, while another user may at the same time (in other words, in parallel, or simultaneously) cooperate with the system for identifying another geometric feature and selecting a suitable strategy for machining that other geometric feature. In this way, the process planning may be distributed between different persons, which may for example collaborate in real-time. This may save time. It may also allow users with specialist knowledge in machining certain types of geometric features (such as holes or cavities) to perform process planning for those geometric features, while other users may perform process planning for other types of geometric features.

According to some embodiments, selecting strategies for machining the respective geometric features via subtractive manufacturing may comprise selecting a first strategy based on user input from a first user, and selecting a second strategy based on user input from a second user. The first strategy may for example be selected for machining a first identified geometric feature and the second strategy may for example be selected for machining a second identified geometric feature.

According to some embodiments, selecting strategies for machining the respective geometric features via subtractive manufacturing may comprise selecting, based on user input from a first user, a first order in which to machine the identified geometric features (and thereby also a first order in which to employ the selected strategies), and selecting, based on user input from a second user, a second order in which to machine the identified geometric features (and thereby also a second order in which to employ the selected strategies). The second user may for example change the order selected by the first user.

According to some embodiments, the method may comprise interacting with a first user regarding identification of a first geometric feature or regarding selection of a first strategy for machining a first geometric feature, while (for example simultaneously as or at the same time) interacting with a second user regarding identification of a second geometric feature or regarding selection of a second strategy for machining a second geometric feature. The one or more tool paths may be generated based on the interaction with the first user and the second user. In other words, the process planning may be performed via real-time collaboration between multiple users, which may for example be located in different rooms, different buildings, or even different countries. The interaction with the first user may for example comprise receiving user input from the first user, and/or prompting the first user to provide user input, and/or providing information to the first user regarding the first feature. Similarly, interaction with the second user may for example comprise receiving user input from the second user, and/or prompting the second user to provide user input, and/or providing information to the second user regarding the second feature.

According to some embodiments, the method may comprise allowing (or providing, or granting) access for a first user for identification of a first geometric feature or for selection of a first strategy for machining a first geometric feature, while (for example simultaneously as or at the same time) receiving user input from a second user regarding identification of a second geometric feature or regarding selection of a second strategy for machining a second geometric feature. The one or more tool paths may be generated based on user input from the first user and the second user. In other words, the process planning may be performed via real-time collaboration between multiple users, which may for example be located in different rooms, different buildings, or even different countries.

According to some embodiments, selecting strategies for machining the respective geometric features via subtractive manufacturing may comprise indicating, to a user (for example via a display), cutting tools available for machining an identified geometric feature, receiving user input indicating a selected cutting tool, and selecting a strategy involving use of the selected cutting tool.

According to some embodiments, selecting strategies for machining the respective geometric features via subtractive manufacturing may comprise indicating, to a user (for example via a display), different possible orders in which to machine different parts (or portions) of the geometric feature, receiving user input indicating a selected order, and selecting a strategy involving use of the selected order.

A geometric feature may for example comprise a plurality of subfeatures (for example flat surfaces, pockets, and holes). Different strategies may involve different orders in which to machine these subfeatures, which may regarded as parts of the geometric feature.

Even if the geometric feature is a simple or non-complex geometric feature such as a flat surface (and therefore does not include multiple subfeatures), different parts of the geometric feature may still be machined in different orders. Some strategies for machining the geometric feature may for example involve spiral-shaped movement of the cutting tool along the surface towards the center of the surface (so the center of the surface is machined last), while other strategies may involve movement of the cutting tool back and forth across the surface (so the center of the surface will not be machined last). In other words, while the strategies do not include the actual tool paths (which are instead generated later on), they may include different types of tool path patterns to be employed.

According to some embodiments, selecting strategies for machining the respective geometric features via subtractive manufacturing may comprise indicating, to a user (for example via a display), different possible cutting data for use during machining of the geometric feature, receiving user input indicating selected cutting data, and selecting a strategy involving use of the selected cutting data. The cutting data may for example include feed rate, cutting speed, and/or depth of cut.

According to some embodiments, selecting strategies for machining the respective geometric features via subtractive manufacturing may comprise indicating, to a user (for example via a display), machine tools available for machining an identified geometric feature, receiving user input indicating a selected machine tool, and selecting a strategy involving use of the selected machine tool.

According to some embodiments, each of the selected strategies may include one or more cutting tools to be employed for machining a geometric feature, and/or an order in which to machine different parts (or portions) of a geometric feature, and/or cutting data (such as feed rate, and/or cutting speed, and/or depth of cut) for use during machining of a geometric feature, and/or one or more machine tools to be employed for machining a geometric feature.

According to some embodiments, the method may further comprise obtaining a model of a work piece (or of a stock model) from which to manufacture the object. The selection of at least one of the strategies may be based on the model of the work piece, and/or at least one of the selected strategies may be adapted based on the model of the work piece. The model of the work piece may for example be a three-dimensional model, such as a CAD model.

According to some embodiments, the method may further comprise providing, based on the generated one or more tool paths, instructions for causing one or more machine tools to manufacture the object via subtractive manufacturing (such as metal cutting). The provided instructions may for example be instructions executable by the one or more machine tools. The machine tool(s) may for example be computer numerically controlled (CNC) machine tools, and the instructions for causing the one or more machine tools to manufacture the object via subtractive manufacturing may for example be provided in the form of CNC code.

According to some embodiments, selecting strategies for machining the respective geometric features via subtractive manufacturing may comprise selecting a subset of the plurality of geometric features, and selecting the same strategy for machining all of the geometric features in the subset. In other words, a strategy may be jointly selected for some of the identified features (for example if those geometric features have similar shapes).

Embodiments may also be envisaged in which a strategy is selected separately for each of the identified geometric features.

Embodiments may also be envisaged in which a single strategy is selected for machining a composite feature formed as a combination of the identified geometric features. The composite feature may for example be identified autonomously by a computer-implemented method, or may for example be identified via cooperation with a human user. The user may for example indicate that a composite geometric feature may be formed by combining some of the plurality of identified geometric features. The strategy selected for machining the composite geometric feature may for example be a mere combination of strategies for machining the respective geometric features comprised in the composite geometric feature, or may be a composite strategy specifically adapted for machining the composite geometric feature (for example for increasing productivity, reducing cutting tool wear, and/or for improving surface quality of the manufactured object).

According to some embodiments, selecting strategies for machining the respective geometric features via subtractive manufacturing may comprise accessing a database including strategies for machining different geometric features, and selecting strategies from the database. The database may for example be a digital database.

The inventors have realized that that experience and know-how (or knowledge) of CAM programmers, machine tool operators and/or persons knowledgeable in the field of subtractive manufacturing (for example metal cutting) may be collected and codified into strategies for machining different geometric features, for facilitating generation of instructions (such as machine code or computer numerical control, CNC, code) for causing machine tools to manufacture objects via subtractive manufacturing. The use of a database with stored strategies helps the user to get from a model of the object to be machined (such as a CAD model) to tool paths to be employed to manufacture the object based on business priorities, e.g., part quality, yield, productivity etc. The use of a database with stored strategies may also prevent users from accidentally devising non-working machining strategies which may damage the machine tool, the cutting tool, and/or the object which is manufactured.

It will be appreciated that the strategies stored in the database need not necessarily be complete recipes specifying in detail how to machine the geometric features. The user may for example be allowed to (or even requested to) adapt or complement a selected strategy to suit the current circumstances. The user may for example be prompted to indicate desired cutting data to be employed in a selected strategy. The user may for example be prompted to indicate whether some element of a selected strategy should be changed. Still, compared to the conventional approach which was time-consuming and required plenty of experience, the proposed method reduces the complexity of the task faced by the user. Note also that the conventional approach requires CAM software and CAM programming skills. The proposed method may for example assist a user without CAM experience to arrive from a model of an object to tool paths manufacturing the object. There may for example be no need for use of traditional CAM software.

It will also be appreciated that for a strategy stored in the database, all elements of how to perform the machining do not necessarily need to be predetermined. For example, rather than involving use of predetermined cutting data, the strategy may include a formula or algorithm for determining suitable cutting data based on the circumstances. The cutting data may for example be determined based on a material from which to manufacture the object, a selected cutting tool, a selected type of tool path pattern, or user preferences indicated via a user interface.

A selected strategy need not necessarily be optimal (for example fastest, or using the lowest number of cutting tools) among all possible strategies for machining the identified feature, but may be an example of a strategy which could be successfully employed for machining the identified geometric feature. Finding the absolute best strategy is practically impossible since the space of theoretically possible strategies for machining a given geometric feature is too large.

According to some embodiments, the database may include a plurality of strategies defining different ways of machining an identified geometric feature. Selecting strategies from the database may comprise indicating, to a user (for example via a display), the plurality of strategies defining different ways of machining the identified geometric feature, receiving user input, and selecting, based the user input, a strategy from the plurality of strategies defining different ways of machining the identified geometric feature.

Different strategies for machining a certain geometric feature may be suitable depending on the circumstances and the equipment available. Hence, rather than storing a single strategy for machining a certain geometric feature, the database may include a plurality of strategies defining different ways of machining the same geometric feature, and a suitable strategy may be selected based on the circumstances, so that a more suitable/appropriate strategy may be employed for machining the identified geometric feature. Some strategies may be preferable with respect to productivity (or manufacturing speed), while other strategies may be preferable with respect to surface quality of the manufactured object, and/or with respect to the amount of tool wear caused by the manufacturing.

According to some embodiments, identifying a plurality of geometric features to be machined as part of manufacturing the object may comprise illustrating, to a user (for example via a display), the model of the object to be manufactured, receiving user input indicating a selected portion of the model, and identifying a geometric feature in the selected portion of the model.

According to some embodiments, the method may comprise, after generating the one or more tool paths, maintaining (or storing) data representing (or identifying) the selected strategies for future generation of tool paths in accordance with the selected strategies. In other words, data from which the selected strategies may be identified (or determined) may be stored also after the one or more tool paths have been generated. If a similar object is to be manufactured in the future, then the stored data regarding strategy selection may be employed for facilitating generation of appropriate tool paths for manufacturing of the new object. Hence, the user does not need to start over from scratch, but may instead start with the previously selected strategies, and may make appropriate modifications, before generating tool paths for manufacturing the new object.

A second aspect provides embodiments of a computer program. The computer program comprises instructions which, when executed by a computer, cause the computer to perform the method of any one of the embodiments of the first aspect.

The effects and/or advantages presented above for embodiments of the method according to the first aspect may also apply to corresponding embodiments of the computer program according to the second aspect.

The computer program may for example be provided in a computer program product. In other words, a computer program product may comprise a computer-readable medium with instructions which, when the instructions are executed by a computer (or by a processor comprised in the computer), cause the computer to perform the method of any one of the embodiments of the first aspect. The computer-readable medium may for example be a transitory computer-readable medium (such as a signal or wave carrying the instructions from a transmitter to a receiver) or a non-transitory computer-readable medium (such as a storage medium or memory on which the instructions are stored). Further examples of transitory computer-readable media include an electronic signal, an optical signal, and a radio signal.

A third aspect provides embodiments of a system configured to obtain a model of an object to be manufactured, and identify, based on the model, a plurality of geometric features to be machined as part of manufacturing the object. The system is configured to select strategies for machining the respective geometric features via subtractive manufacturing, and after selecting strategies for all of the plurality of geometric features, generate one or more tool paths for manufacturing the object in accordance with the selected strategies.

The system may for example comprise one or more processors configured to perform the method as defined in any of the embodiments of the first aspect. The system may for example comprise one or more storage media with instructions for causing the one or more processors to perform the method as defined in any of the embodiments of the first aspect.

The system may for example comprise the database.

The system may for example comprise a user interface (for example a HMI) for receiving the user instructions.

The system may for example comprise a display (or screen) for presenting information to a user. The display may for example be employed to show data to the user that provides insight into how the system is making decisions.

The system may for example comprise a machine code generator configured to generate the instructions for causing one or more available machine tools to manufacture the object via subtractive manufacturing.

The system may for example comprise one or more available machine tools, and/or one or more available cuttings tools, and/or one or more available fixtures for holding a work piece.

The system may for example be comprised in a machine tool, such as a CNC machine tool.

The effects and/or advantages presented above for embodiments of the method according to the first aspect may also apply to corresponding embodiments of the system according to the third aspect.

It is noted that embodiments of the present disclosure relate to all possible combinations of features recited in the claims.

### Brief description of the drawings

In what follows, example embodiments will be described in greater detail with reference to the accompanying drawings, on which:
Fig. 1 is a schematic overview of an example machining site and associated equipment;
Fig. 2 shows perspective views of example geometric features for which strategies may be stored in a database;
Fig. 3 shows two different examples of types of tool path patterns for machining the same geometric feature;
Fig. 4 is a flow chart of a method performed by a system shown in Fig. 1, according to an embodiment;
Fig. 5 is a flow chart of a method similar to the method shown Fig.4, but where a user goes back and modifies earlier decisions;
Fig. 6 is a flow chart of a method similar to the method in Fig. 4, but where selection of strategies is performed via cooperation between multiple users;
Fig. 7 is a flow chart of an example scheme for how strategies may be selected in the method from Fig. 4; and
Fig. 8 is a flow chart of a method similar to the method from Fig. 4, but where more details are provided regarding identification of features and selection of strategies, according to an embodiment; and
Fig. 9 is a flow chart of an example scheme for how a strategy may be selected for machining a geometric feature.

All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

### Detailed description

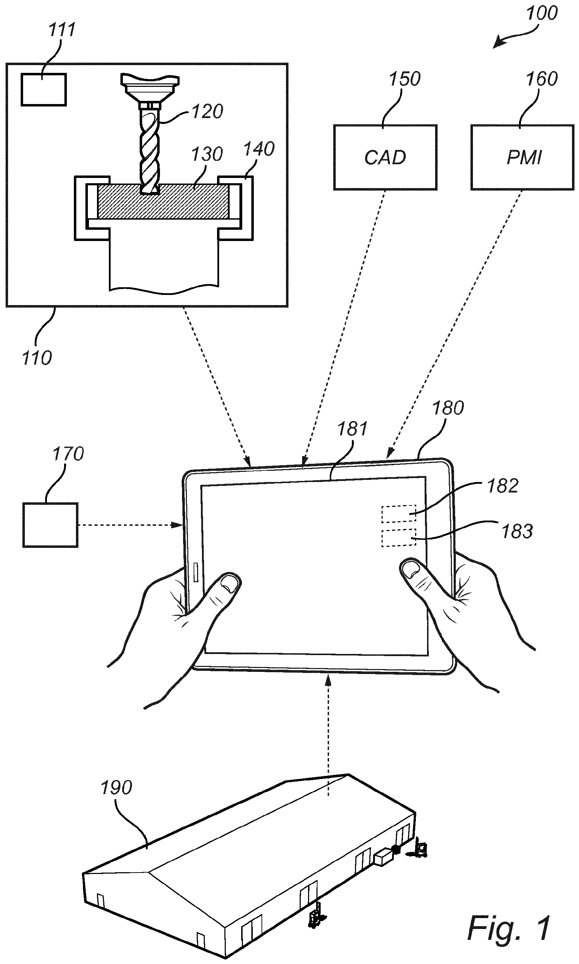

Fig. 1 is a schematic overview of a machining site 100 and associated equipment. One or more machine tools 110 are arranged at the machining site 100 for performing subtractive manufacturing. The machine tools 110 may for example be adapted for metal cutting. The machine tools 110 may be adapted to perform machining operations, for example metal cutting operations, such as drilling, milling, turning, reaming, or threading. A machine tool database may for example be employed to keep track of the available machine tools 110.

One or more cutting tools 120 are available for use by the machine tools 110 to perform machining operations where a cutting tool 120 moves relative to a work piece 130 for cutting away material from the work piece 130. Cutting tools 120 available for use by a machine tool 110 may for example be arranged in a tool magazine (not shown) from which the cutting tools 120 may be fed into position in the machine tool 110 to replace the previously used cutting tool 120. The cutting tools 120 may for example be replaced by a robotic arrangement or may be replaced manually. A cutting tool database may for example be employed to keep track of the available cutting tools 120. The cutting tools 110 may be available directly at the machining site 100, or in a warehouse 190 from which they may be retrieved.

The cutting tools 120 may include general purpose cutting tools as well as cutting tools specifically adapted for cutting in certain materials or for cutting certain shapes. Some of the cutting tools 120 may be solid cutting tools formed in a single piece of material such as steel or cemented carbide. Some of the cutting tools 120 may consist of multiple pieces fitted together to form the cutting tool. Some of the cutting tools 120 may for example be equipped with replaceable cutting inserts (not shown). The cutting inserts may for example comprise cemented carbide or ceramic material, and may for example be provided with various coatings for meeting user requirements. The coatings may for example be adapted for cutting in certain materials, and/or may be adapted for improving heat resistance and/or wear resistance. One or more fixtures 140 are available for holding the work piece 130 in position during the machining. Fixtures 140 available for use by a machine tool 110 may for example be stored in a vicinity of the machine tool 110 so that the fixtures 140 may be retrieved when needed to replace the currently employed fixture 140. The fixtures 140 may for example be replaced by a robotic arrangement or may be replaced manually.

It will be appreciated that the fixture 140 depicted in Fig. 1 is an example, and that many other types of fixtures may be envisaged.

The machine tools 110 may be equipped with cooling systems (not shown) for providing cooling during machining. The cooling may for example be provided via a cooling fluid.

The machine tools 110 are equipped with control systems 111 for controlling the machine tools 110. The control system 111 of a machine tool 110 may for example control servos of the machine tool 110 for moving the cutting tool 120 relative to the work piece 130. In some machine tools 110, the control system 111 may cause both the cutting tool 120 and the work piece 130 to move. The machine tools 110 may for example be computer numerically controlled (CNC) machine tools 110, and the control system 111 may be adapted to execute CNC code.

An object to be manufactured is defined by a model 150, such as a three-dimensional CAD model 150. Tolerances for the object regarding shape accuracy, geometric dimensions and/or surface finish may be specified via product and manufacturing information (PMI) 160. The PMI 160 may also specify the material to be employed to manufacture the object.

For the machine tools 110 to be able to manufacture the object in accordance with the model 150 and the PMI 160, appropriate instructions need to be generated for the control systems 111 of the machine tools 110.

Generation of such instructions is a complicated task involving selection of for example operation sequences (for example in which order to perform different operation steps such as facing, hole making, and threading), machine tools 110, cutting tools 120, fixtures 140, and cutting data (such as feed rate, cutting speed, and depth of cut). These factors affect the quality and precision of the manufactured object, and may also affect the manufacturing time and/or wear on the cutting tools. Hence, generation of suitable instructions for the control system 111 usually involves plenty of trial and error, even for experienced people.

However, persons knowledgeable in the field of subtractive manufacturing, and companies with extensive experience in developing cutting tools, have collected plenty of knowledge over time regarding how to machine different geometric features. This knowledge may be codified and stored as strategies in a database 170. The database 170 includes strategies for machining different geometric features. The database 170 may also include different strategies for machining a certain geometric feature depending on the material of the work piece 130.

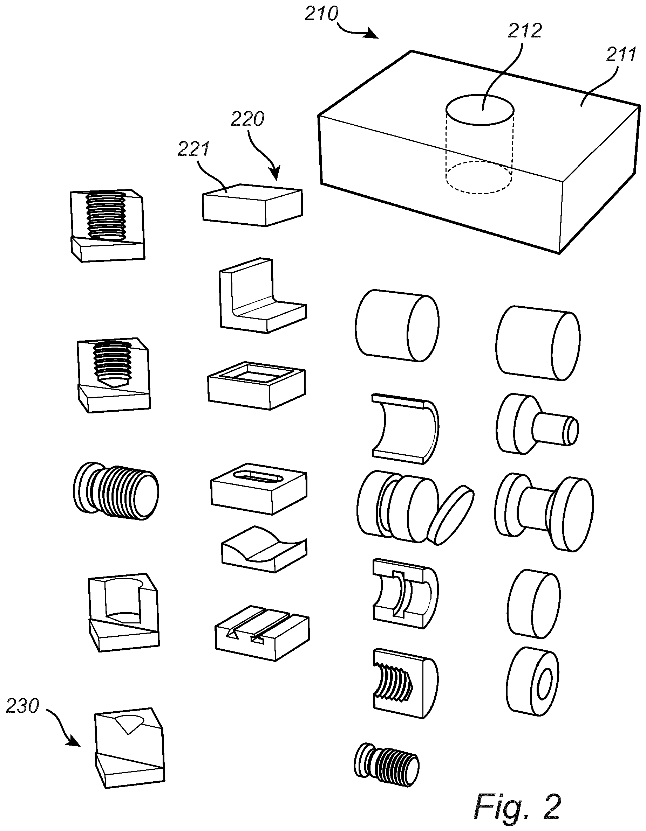

Fig. 2 shows perspective views of example geometric features for which associated strategies are included in the database 170. The geometric features covered by the database 170 may for example include a collection of common features which may have relatively simple geometries. The geometric features covered by the database 170 may also include more complicated features having several subfeatures such as holes or threads. Even quite complicated features may be included in the database 170, as long as suitable strategies for manufacturing them have been devised.

For a given object to be manufactured, geometric features to be machined as part of manufacturing the object may first be identified. The database 170 may then be employed to find strategies for machining the identified geometric features.

Although strategies for many geometric features may have been stored in the database 170, there may of course be some features lacking entries in the database 170. The database 170 may therefore be built up over time to cover even more geometric feature (or shapes) as new strategies are figured out by people in the technical field.

For some or all of the geometric features, the database 170 may include a plurality of strategies defining different ways of machining the same geometric feature. Strategies may therefore be selected from the database based on the current circumstances.

Fig. 2 shows an object 210 having several flat surfaces 211 and a hole 212 with an opening in the top surface 211. A first example geometric feature to be machined may consist of the upper flat surface 211 and the hole 212. In other words, the first example geometric feature has two subfeatures 211 and 212. In a first strategy for machining the geometric feature, the hole 212 is machined first, and the surface 211 is machined afterwards. In a second strategy, the surface 211 is machined first, and the hole 212 is machined afterwards.

Drilling of the hole 212 after forming the surface 211 (as in the second strategy) may cause deformations (or damage) at the surface 211 close to where the drill enters the hole 212. Forming the surface 211 after drilling the hole 212 (as in the first strategy) may cause deformation in the hole 212 close to the surface 211. Whether the deformations caused by the respective strategies are acceptable may depend on the tolerances specified for the object to be manufactured, but also on the cutting tools available for performing the machining. Some drills may for example cause more deformations to the surface 211 than others, so that an additional machining operation is required to remove the deformations caused by the drilling. In such cases, the first strategy (machining the hole 212 first) may be more suitable than the second strategy (machining the surface 211 first). Selection of a suitable strategy from the database 170 may therefore be based on the available cutting tools.

Another factor that may affect the selection between the first and second strategies is bending of the drill employed to make the hole 212, which may affect precision. Machining of the surface 211 first reduces the depth of the hole 212 to be drilled, which may affect how much the drill may bend.

Further, if the available drills are short, it may be desirable to employ the second strategy (machining the surface 211 first), since machining of the surface 211 first reduces the depth of the hole 212 to be drilled so that the drill reaches far enough to make the hole.

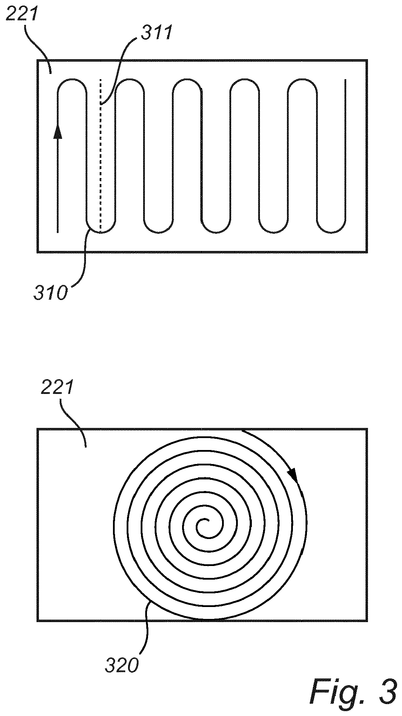

A second example geometric feature is the flat upper surface 221 of the object 220 shown in Fig. 2. Fig. 3 shows two examples of different types of tool path patterns which could be employed for machining the geometric feature 221.

Fig. 3 shows the example feature 221 from above. A first strategy for machining the feature 221 employs a type of tool path pattern 310 where the cutting tool 120 passes back and forth across the surface 221. A second strategy for machining the feature 221 employs a type of tool path pattern 320 where the cutting tool 120 spirals inwards towards the center of the surface 221.

It will be appreciated that the tool path patterns shown in Fig. 3 are schematic, and that the spiral-shaped tool path pattern 320 may for example be larger so that it covers the entire surface 221.

The first tool path pattern 310 is rather simple and convenient to use. However, the fact that the cutting tool 120 moves back and forth means that it passes the area along the dotted line 311 in different directions at the respective sides of the line 311, which may cause undesired roughness or uneven areas along the dotted line 311 when certain cutting tools are employed. The selected strategy may also have a negative influence on tool life or may in some cases cause tool breakage.

The second tool path pattern 320 allows the cutting tool 120 to perform cutting in a more uniform way along the tool path (compared to the first tool path pattern 310 where the cutting tool 120 may pass in and out of cut). The second tool path pattern 320 does not suffer from the potential problems associated with the first tool path pattern 310, and may therefore be preferable for some cutting tools 120. Selection of a suitable strategy from the database 170 may therefore be based on the available cutting tools 120.

Note that the number of passes back and forth over the surface 221 in the first tool path pattern 310 may be adapted based on the size of the available cutting tool 120. If a milling cutter with small diameter is employed, then a large number of passes may be needed. If a milling cutter with larger diameter is employed, then a smaller number of passes may be employed. This may for example affect the manufacturing time and/or tool wear.

The example strategies described above with reference to Figs. 2 and 3 are relatively simple since they relate to relatively simple shapes 210 and 220. It will be appreciated that strategies for machining more complicated geometric features (such as the example feature 230 shown in Fig. 2) are typically more complicated. The skilled person realizes that strategies for machining more complicated geometric features may for example involve several different machining operations using different cutting tools and several different types of tool path patterns. Machining of some geometric features may for example include steps such as roughing, semi-finishing and finishing. Each of these steps may for example include several machining operations. The skilled person also realizes that a single strategy may include several machining operations performed by different machine tools 110. By selecting between different strategies, one may not only influence the order in which machining operations are performed, but also the order in which the different machine tools 110 are employed.

It will be appreciated that the database 170 may include strategies for machining many more geometric features than those shown in Fig. 2. It will also be appreciated that the tool path patterns 310 and 320 described above with reference to Fig. 3 are only intended as simple examples, and that other tool path patterns (for example including tool paths in three dimensions rather than tool paths in a plane as in Fig 3) may also be envisaged.

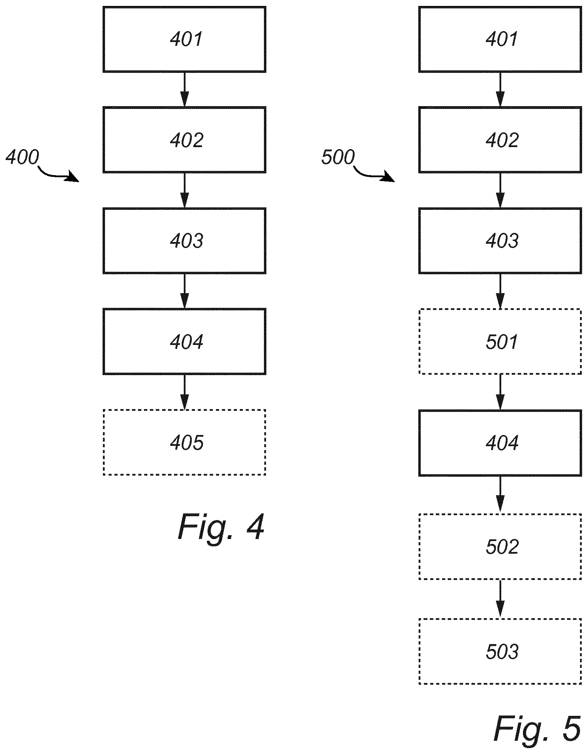

It will also be appreciated that while a strategy may be associated with a certain type of tool path pattern, the strategy need not include the actual tool paths to be employed. As will be described below with reference to Fig. 4, the actual tool paths to be employed for the manufacturing may be generated after strategies have been selected for all geometric features to be machined.

A system 180 is adapted to generate instructions for causing the machine tools 110 to manufacture the object defined by the model 150 and the PMI 160. The system 180 is equipped with a user interface 181 for user interaction. The user interface 181 may for example be a human machine interface (HMI). The HMI may for example include a touch screen 181 and one or more keys or buttons. The system 180 is adapted to select strategies from the database 170 and to generate instructions for the machine tools 110. Such tasks may for example be performed by one or more processors 182. The processors 182 may for example be digital processors.

The system 180 may for example be located at the machining site 100 in the form of a stationary or portable computer device with embedded/standalone human machine interface (HMI) with communication possibility, e.g. a tablet computer or a smart phone, equipped with suitable software. In other embodiments, the system 180 may for example be integrated as a part of one or more of the machine tools 110. Alternatively, the system 180 may be arranged at a remote location, or may be enabled on another suitable platform, e.g., cloud-based technology with possibility to communicate, compute, storage and deployment of software in secure and efficient manner. In a preferred embodiment, the system 180 is implemented as a software application running on a tablet computer.

A database 170 communicatively coupled to the system 180 and including e.g. a machine tool database and/or cutting tool database and/or a strategy database and/or a model database and/or a PMI database may for example be employed to keep track of the available machine tools 110. The database 170 may be implemented in local memory of the system 180 or as network based storage, e.g. a server or virtual/cloud server storage.

The system 180 may for example comprise the database 170. Embodiments may also be envisaged in which the database 170 is arranged at a remote location, or in which the database 170 is cloud-based. In a preferred embodiment, the system 180 is implemented as a software application running on a tablet computer.

Operation of the system 180 will now be described with reference to Fig. 4. Fig. 4 is a flow chart of a method 400 performed by the system 180, according to an embodiment.

In a first step, the model 150 of an object to be manufactured via subtractive manufacturing is obtained 401. In the present embodiment, the model 150 is a computer-aided design (CAD) model generated by a component designer at a remote computer, and the CAD model is received by the system 180. However, embodiments may also be envisaged in which the CAD model 150 is generated by the system 180, or by a user of the system 180. The PMI 160 may for example be obtained with the CAD model 150.

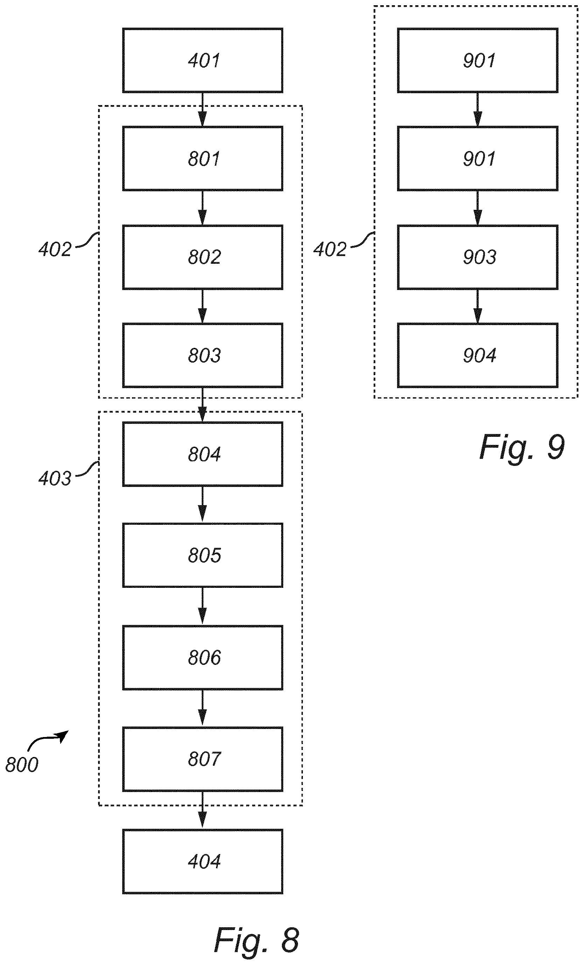

A plurality of geometric features to be machined as part of manufacturing the object is then identified 402 based on the model 150. An identified geometric feature may for example constitute a portion of the object to be manufactured, or may be an intermediate shape to be machined before the final shape of the object may be machined. The identification 402 of geometric features may for example be performed automatically via a computer algorithm. Several schemes for such automatic detection of geometric features (also referred to as feature recognition) are known in the art, and such schemes are therefore not described further herein. As described below with reference to Fig. 8, user interaction may be involved in the identification 402 of the geometric features.

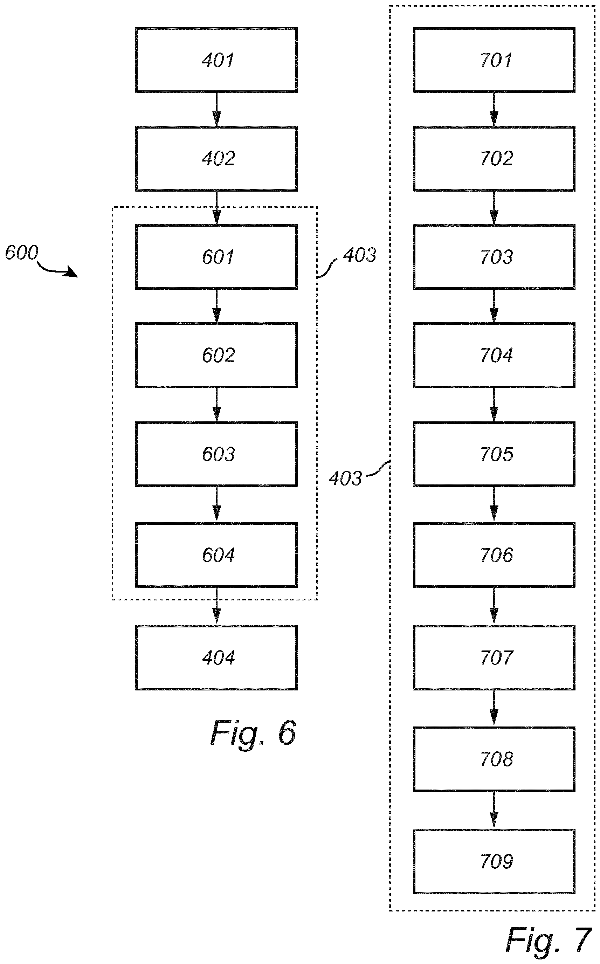

Strategies for machining the respective geometric features via subtractive manufacturing are then selected 403. The strategies may for example be selected by a human user, by a computer algorithm, or by a human user assisted by an algorithm (or the system 180) that proposes suitable strategies based on the current circumstances. The selection of strategies may not only be based on the shape of the geometric features to be machined, but may also be based on the shape and material of the work piece 130 from which the object is to be manufactured. The work piece material typically affects the selection of which cutting tools 120 and cutting data to employ for the machining. A model of the work piece 130 may for example be received by the system 180, for example in the form of a three-dimensional CAD model. More detailed examples of how the strategies may be selected are described below with reference to Figs. 6-8.

After strategies have been selected 403 for all of the plurality of geometric features, one or more tool paths are generated 404 for manufacturing the object in accordance with the selected strategies. A computer algorithm may for example compute suitable tool paths based on the selected strategies.

Optionally, the method 400 may further comprise providing 405, based on the generated one or more tool paths, instructions for causing one or more machine tools 110 to manufacture the object via subtractive manufacturing. The system 180 may for example comprise a machine code generator 183 for generating the instructions for the machine tool 110 (or the instructions may be generated by the one or more processors 182). The instructions for the machine tool 110 may for example be provided in the form of CNC code.

In an example scenario, the generated 405 instructions are then provided directly to the machine tool 110 via a wired or wireless connection. In another example scenario, the generated 405 instructions are provided from the system 180 to the machine tool 110 via the internet or via a cloud-based service. The machine tool 110 then manufactures the object via subtractive manufacturing in accordance with the received instructions. In another scenario, the system 180 is integrated as a part of the machine tool 110 itself.

Fig. 5 is a flow chart of a method 500 similar to the method 400 from Fig.4, but where a user goes back and modifies earlier decisions/selections.

Since the tool paths are generated 404 after strategies for all of the identified geometric features have been selected (instead of being generated for one feature at a time before strategies have been selected for all features), the sequential dependence from traditional CAM programming is avoided. This allows the user to conveniently go back and undo an earlier decision/selection, without having to undo (or alter or rework) all decisions/selections made after that decision. The user may make such changes 501 prior to generation 404 of the tool paths, so as to obtain a modified set of strategies. The changes 501 may include replacing or altering or deleting a previously selected 403 strategy. The changes 501 may include changing an order in which to machine the geometric features, or changing an order in which the previously selected machining strategies are to be employed. The changes 501 may include inserting new machining operations, or combining some geometric features into a composite geometric feature for which a composite strategy is employed instead of using separate strategies for the respective geometric features. The changes 502 may include adding new geometric features to be machined, and selecting strategies for these new features. After the changes 501 have been performed, the tool paths are then generated 404 based on the modified set of strategies.

Additionally, or alternatively, the user can make changes 502 after generation 404 of the tool paths, so as to obtain a new set of selected strategies. The changes 502 may include replacing or altering or deleting a previously selected strategy. The changes 502 may include changing an order in which to machine the geometric features, or changing an order in which the previously selected machining strategies are to be employed. The changes 502 may include inserting new machining operations, or combining some geometric features into a composite geometric feature for which a composite strategy is employed instead of using separate strategies for the respective geometric features. The changes 502 may include adding new geometric features to be machined, and selecting strategies for these new features. After the changes 502 have been performed, one or more new tool paths are then generated 503 for manufacturing the object in accordance with the new set of selected strategies. The generation 503 of a new set of tool paths may take some time and may occupy some computational resources. However, the changes (or modifications) 502 made after generation 404 of the tool paths may be as convenient for the user to make as the changes (or modifications) 501 made before generation 404 of the tool paths. It still provides an advantage compared to the sequential dependence in traditional CAM programming.

The strategies and settings selected during process planning for manufacturing of an object may be saved for future use, rather than only saving the tool paths or the final CNC code. The strategies and settings selected during process planning for manufacturing of an object may be saved at a location where this information may be retrieved by the system 180, such as locally in the system 180, at a server in a cloud-based storage solution, or in a machine tool 110. If it turn out that a similar object is to be manufactured in the future, then these saved strategies and selections may be reused. Appropriate changes/modifications of the saved strategies and settings may for example be performed to adapt the process planning to the new object. Tool paths may then be generated, followed by generation of CNC code. The saved strategies and selections may be reused also if a different machine tool 110 is to be employed for the manufacturing. Tool paths and CNC code appropriate for the new machine tool 110 may be generated based on the saved strategies and settings.

Fig. 6 is a flow chart of a method 600 similar to the method 400 in Fig. 4, but where selection of strategies is performed via cooperation between multiple users.

In the present embodiment, the step of selecting 403 strategies for manufacturing the identified geometric features comprises illustrating 601, to multiple users, the model 150 of the object to be manufactured, receiving 602 user input from the multiple users, selecting 603 a first strategy based on user input from a first user, and selecting 604 a second strategy based on user input from a second user. In the present embodiment, two users are collaborating. The first user selects a strategy for manufacturing a first geometric feature, and the other user selects a strategy for manufacturing a second geometric feature. The users may for example be located at different locations, and may connect to the system 180 via the internet to collaborate in real-time. Such real-time collaboration is difficult in traditional CAM programming due to the sequential dependence described above. Since the sequential dependence is now avoided, the system 180 may interact with the first user regarding selection 603 of a first strategy for machining the first geometric feature, while at the same time interacting with the second user regarding selection 604 of a second strategy for machining the second geometric feature. In other words, the system 180 allows access for the first user to selection 603 of a first strategy for machining the first geometric feature, while at the same time receiving user input from the second user regarding selection 604 of a second strategy for machining the second geometric feature.

The collaboration between the two users may also involve selection of an order in which to machine the identified geometric features. In an example scenario, the first user selects a first order in which to machine the geometric features. The second user then realizes that a different order would be preferable. Since the sequential dependent of traditional CAM programming is avoided (by generating the tool paths after selecting strategies for all of the identified geometric features), the second user may can simply change the order in which to machine the identified geometric features (and thereby the order in which the selected strategies are to be employed), and appropriate tool paths can then be generated 404.

Fig. 7 is a flow chart of an example scheme for how strategies may be selected 403 in the method 400 from Fig. 4. In the present example, each strategy includes a machine tool 110 to be employed for machining a geometric feature, a cutting tool 120 to be employed for machining the geometric feature, an order in which to machine different parts of the geometric feature, and cutting data (such as feed rate, cutting speed, and depth of cut) for use during machining of the geometric feature. The user is prompted by the system 180 (which in the present example 180 is a tablet computer 180 with a touch screen 181) to select these parts of the strategy in a step-wise fashion. In other words, the step of selecting 403 strategies for machining the respective geometric features via subtractive manufacturing comprises:
- indicating 701, to a user via the screen 181, machine tools 110 available for machining an identified geometric feature;
- receiving 702 user input via the screen 181 indicating a selected machine tool 110;
- indicating 703, to a user via the screen 181, cutting tools 120 available for machining the identified geometric feature;
- receiving 704 user input via the screen 181 indicating a selected cutting tool 120; and
- indicating, 705 to a user via the screen 181, different possible orders in which to machine different parts of the geometric feature;
- receiving 706 user input via the screen 181 indicating a selected order;
- indicating 707, to a user via the screen 181, different possible cutting data for during machining of the geometric feature;
- receiving 708 user input via the screen indicating selected cutting data; and
- selecting 709 a strategy involving use of the machine tool, cutting tool, order, and cutting data selected by the user.

In this way, the system 180 assists the user by providing a convenient and straightforward way to select a strategy for an identified geometric feature. This procedure may be repeated for each identified geometric feature.

Fig. 8 is a flow chart of a method 800 similar to the method 400 from Fig. 4, but where more details are provided regarding identification 402 of features and selection 403 of strategies, according to an embodiment.

In the present embodiment, the step 402 of identifying a plurality of geometric features to be machined as part of manufacturing the object comprises:
- illustrating 801, to the user, the model 150 of the object to be manufactured,
- receiving 802 user input indicating a selected portion of the model, and
- identifying 803 a geometric feature in the selected portion of the model.

The model 150 is illustrated 801 on the touch screen 181, and the user indicates 802 a location in the model by clicking at the touch screen 181. A feature detection algorithm is run in a region around where the user has indicated, and one or more geometric features present in that region are identified 803. This may be repeated until all geometric features of the object to be manufactured have been identified.

In the present embodiment, the step of selecting 403 strategies for machining the respective geometric features via subtractive manufacturing comprises:
- accessing 804 the database 170 including strategies for machining different geometric features,
- indicating 805, to the user, a plurality of strategies defining different ways of machining the identified geometric feature,
- receiving 806 user input, and
- selecting 807, based the user input, a strategy from the plurality of strategies defining different ways of machining the identified geometric feature.

In other words, the user selects (with or without assistance from the system 180) among the strategies available in the database 170 for machining the identified geometric feature. This may be repeated until strategies have been selected for all identified geometric features.

A selected 807 strategy may include at least:
- a sequence of operations including for example facing, hole-making, and threading;
- one or more machine tools 110 for performing the manufacturing;
- one or more cutting tools 120 for use by the one or more machine tools 110;
- one or more fixtures 140 for holding a work piece 130; and
- a type of tool path pattern to be employed.

The strategy may also include use of cooling fluids for providing cooling during the machining. The strategy may also include suitable cutting data, or means for determining suitable cutting data (such as feed rate, cutting speed, and depth of cut) based on the circumstances. The cutting data may for example be determined based on the material of the work piece 130, the tolerance set by the PMI 160, a selected type of tool path pattern, and a selected cutting tool 120.

Fig. 9 is a flow chart of an example scheme for how to select 403 a strategy for the subset of geometric features in the method 400 described above with reference to Fig. 4. In the present example scheme, the step of selecting 403 strategies for the identified geometric features comprises:
- selecting 901 a machine tool 110 to be employed for machining an identified geometric feature;
- selecting 902 a cutting tool 120 to be employed for machining the geometric feature;
- selecting 903 a certain type of tool path pattern to be employed for machining the geometric feature; and
- selecting 904 cutting data (such as feed rate, cutting speed and depth of cut) to be employed for machining the geometric feature.

In other words, the system 180 guides the user step by step though the process of selecting different parts of a strategy for machining a geometric feature. In an example scenario, the user is prompted via the touch screen 181 to make the respective selections. The user may for example be prompted via the touch screen 181 to manually select suitable cutting data to be employed for the machining operations, but the system 180 may also suggest several sets of suitable cutting data, for the user to choose from. The system 180 may for example assist the user even further by also suggesting suitable cutting tools 120, and/or suitable machine tools 110, and/or suitable types of tool path patterns for the user to choose from.

The person skilled in the art realizes that the present invention is by no means limited to the preferred embodiments described above. On the contrary, many modifications and variations are possible within the scope of the appended claims. For example, many different geometric features than those shown in Fig. 2 may be covered by the database 170. Further, it will be appreciated that the cutting tool patterns shown in Fig. 3 merely serve as examples, and that many other types of tool path patterns may be envisaged. It will be appreciated that the machining site 100 depicted in Fig. 1 is a simplified example. For example, Fig. 1 only shows a single machine tool 110, a single cutting tool 120, and a single fixture 140, while a real machining site may typically include several available machine tools 110, cutting tools 120, and fixtures 140.

It will be appreciated that a processor 182 (or processing circuitry) may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide computer functionality, either alone or in conjunction with other computer components (such as a memory or storage medium).

It will also be appreciated that a memory or storage medium (or a computer-readable medium) may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by a processor or processing circuitry.

It will also be appreciated that the user may provide user input to the system 180 by checking tick-boxes, moving sliders, pressing keys or in any other way interacting via a HMI 181 of the system 180.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method (400) comprising:
obtaining (401) a model (150) of an object to be manufactured via subtractive manufacturing;
identifying (402), based on the model, a plurality of geometric features to be machined as part of manufacturing the object;
selecting (403) strategies for machining the respective geometric features via subtractive manufacturing; and
after selecting strategies for all of said plurality of geometric features, generating (404) one or more tool paths for manufacturing the object in accordance with the selected strategies.

2. The method of claim 1, further comprising, prior to generating the one or more tool paths for manufacturing the object in accordance with the selected strategies:
providing (501) a new set of selected strategies by at least replacing or altering or deleting a previously selected strategy for manufacturing a geometric feature, wherein the one or more tool paths are generated based on the new set of selected strategies.

3. The method of any of the preceding claims, further comprising:
after generating the one or more tool paths for manufacturing the object in accordance with the selected strategies, providing (502) a new set of selected strategies by at least replacing or altering or deleting a previously selected strategy for manufacturing a geometric feature; and
generating (503) one or more new tool paths for manufacturing the object in accordance with the new set of selected strategies.

4. The method of any of the preceding claims, further comprising, prior to generating the one or more tool paths for manufacturing the object in accordance with the selected strategies:
changing (501) an order in which to machine the identified geometric features, wherein the one or more tool paths are generated in accordance with the changed order.

5. The method of any of the preceding claims, further comprising:
after generating the one or more tool paths for manufacturing the object in accordance with the selected strategies, changing (501) an order in which to machine the identified geometric features; and
generating (503) one or more new tool paths for manufacturing the object in accordance with the changed order.

6. The method of any of the preceding claims, further comprising:
illustrating (601), to multiple users, the model of the object to be manufactured; and
receiving (602) user input from the multiple users,
wherein the one or more tool paths are generated based on the user input from the multiple users.

7. The method of claim 6, wherein selecting strategies for machining the respective geometric features via subtractive manufacturing comprises:
a) selecting (603) a first strategy based on user input from a first user, and selecting (604) a second strategy based on user input from a second user; or
b) selecting, based on user input from a first user, a first order in which to machine the identified geometric features, and selecting, based on user input from a second user, a second order in which to machine the identified geometric features.

8. The method of any of the preceding claims, comprising:
interacting with a first user regarding identification of a first geometric feature or regarding selection of a first strategy for machining a first geometric feature, while interacting with a second user regarding identification of a second geometric feature or regarding selection of a second strategy for machining a second geometric feature,
wherein the one or more tool paths are generated based on the interaction with the first user and the second user.

9. The method of any of the preceding claims, comprising:
allowing access for a first user for identification of a first geometric feature or for selection of a first strategy for machining a first geometric feature, while receiving user input from a second user regarding identification of a second geometric feature or regarding selection of a second strategy for machining a second geometric feature,
wherein the one or more tool paths are generated based on user input from the first user and the second user.

10. The method of any of the preceding claims, wherein selecting strategies for machining the respective geometric features via subtractive manufacturing comprises:
indicating (703), to a user, cutting tools (120) available for machining an identified geometric feature;
receiving (704) user input indicating a selected cutting tool; and
selecting (709) a strategy involving use of the selected cutting tool.

11. The method of any of the preceding claims, wherein selecting strategies for machining the respective geometric features via subtractive manufacturing comprises:
indicating (705), to a user, different possible orders in which to machine different parts of the geometric feature;
receiving (706) user input indicating a selected order; and
selecting (709) a strategy involving use of the selected order.

12. The method of any of the preceding claims, wherein selecting strategies for machining the respective geometric features via subtractive manufacturing comprises:
indicating (707), to a user, different possible cutting data for use during machining of the geometric feature;
receiving (708) user input indicating selected cutting data; and
selecting (709) a strategy involving use of the selected cutting data.

13. The method of any of the preceding claims, wherein selecting strategies for machining the respective geometric features via subtractive manufacturing comprises:
indicating (701), to a user, machine tools (110) available for machining an identified geometric feature;
receiving (702) user input indicating a selected machine tool; and
selecting (709) a strategy involving use of the selected machine tool.

14. The method of any of the preceding claims, wherein each of the selected strategies includes:
one or more cutting tools (120) to be employed for machining a geometric feature; and/or
an order in which to machine different parts of a geometric feature; and/or
cutting data for use during machining of a geometric feature; and/or
one or more machine tools (110) to be employed for machining a geometric feature.

15. The method of any of the preceding claims, further comprising:
obtaining a model of a work piece (130) from which to manufacture the object,
wherein:
the selection of at least one of the strategies is based on the model of the work piece; and/or
at least one of the selected strategies is adapted based on the model of the work piece.

16. The method of any of the preceding claims, further comprising:
providing (405), based on the generated one or more tool paths, instructions for causing one or more machine tools (110) to manufacture the object via subtractive manufacturing.

17. The method of any of the preceding claims, wherein selecting strategies for machining the respective geometric features via subtractive manufacturing comprises:
accessing (804) a database including strategies for machining different geometric features; and
selecting strategies from said database.

18. The method of claim 17, wherein the database includes a plurality of strategies defining different ways of machining an identified geometric feature, and wherein selecting strategies from said database comprises:
indicating (805), to a user, the plurality of strategies defining different ways of machining said identified geometric feature;
receiving (806) user input; and
selecting (807), based on the user input, a strategy from the plurality of strategies defining different ways of machining said identified geometric feature.

19. The method of any of the preceding claims, wherein identifying a plurality of geometric features to be machined as part of manufacturing the object comprises:
illustrating (801), to a user, the model of the object to be manufactured;
receiving (802) user input indicating a selected portion of the model; and
identifying (803) a geometric feature in the selected portion of the model.

20. The method of any of the preceding claims, further comprising:
after generating the one or more tool paths, maintaining data representing the selected strategies for future generation of tool paths in accordance with the selected strategies.

21. A computer program comprising instructions which, when the instructions are executed by a computer, cause the computer to perform the method of any one of claims 1-20.

22. A system (180) configured to:
obtain a model (150) of an object to be manufactured;
identify, based on the model, a plurality of geometric features to be machined as part of manufacturing the object;
select strategies for machining the respective geometric features via subtractive manufacturing; and
after selecting strategies for all of said plurality of geometric features, generate one or more tool paths for manufacturing the object in accordance with the selected strategies.

23. A machine tool (110) comprising the system of claim 22.
